# EUROPEAN PATENT SPECIFICATION

(11) **EP 4 193 119 B1**
(45) Date of publication and mention of the grant of the patent: **08.05.2024**
(21) Application number: 21749259.4
(22) Date of filing: 19.07.2021
(51) Int. Cl.: G01B 5/012

(54) **MEASUREMENT METHOD**
MESSVERFAHREN
PROCÉDÉ DE MESURE

(30) Priority: 04.08.2020 GB 202012104
(43) Date of publication of application: 14.06.2023
(73) Proprietor: Renishaw PLC, Wotton-under-Edge, Gloucestershire GL12 8JR (GB)
(72) Inventor: TURNER, Rhys, David, Gloucestershire GL12 8JR (GB); BUTTER, Andrew, Geoffrey, Gloucestershire GL12 8JR (GB)
(74) Representative: Rolfe, Edward William
(86) International application number: PCT/GB2021/051846
(87) International publication number: WO 2022/029405

(56) References cited:
- WO-A1-2018/150178
- US-A- 5 105 552
- US-A1- 2011 277 543

## Description

This invention relates to a method for measuring one or more small features (e.g. recessed features) of a part using a contact probe mounted on a coordinate positioning apparatus. In particular, the invention relates to a technique for measuring the length, depth and/or the position of one or more aspects of a feature (e.g. the position of the recessed feature, and/or the position of one or more edges of the recessed feature) on a coordinate positioning apparatus.

The use of a contact probe on a coordinate positioning apparatus such as a coordinate measurement machine "CMM" or machine tool to obtain dimensional information about an artefact is well-known. Contact probes commonly have a stylus with a stylus tip for contacting an artefact to be measured. Often, the stylus tip is a spherical element, such as a ruby ball.

A typical CMM facilitates relative motion of the artefact and probe in three perpendicular linear axes (a "three-axis" machine) such that the stylus tip can be brought into contact with the artefact under the control of a computer. It is also known to provide the CMM with one or more axes of rotation so as to facilitate relative rotation between the artefact and the contact probe. A common setup is the provision of a two-axis articulated head, on which a probe can be mounted, and which facilitates rotation of the probe about two perpendicular axes of rotation. When a two-axis articulated head is provided on a three-axis CMM, it is commonplace to refer to the CMM as a "five-axis" CMM.

During a measurement operation, the probe's stylus tip is moved into the artefact. Contact between the stylus tip and the artefact is detected and the position of the stylus tip can be used to determine the point of contact. Contact probes are typically categorised as being either a touch-trigger probe or an analogue (or "scanning") probe. Touch-trigger probes output a "trigger" signal when contact between the stylus and part is detected. The motion of the CMM is stopped on receipt of a trigger signal and the position of the machine's axes at the point the trigger signal is received are determined, so that the position of the stylus tip in three-dimensional space can be determined. Subsequent touch-trigger measurements can be obtained by repeating this process. In contrast, analogue probes provide an output which varies dependent on the extent/degree of stylus deflection. The analogue probe's output can be combined with the machine axes positions so as to determine the position of the stylus tip in a three-dimensional measurement space/volume. With an analogue probe, a series of surface measurements can be obtained whilst scanning the probe in continuous contact with the surface of the artefact (hence the name "scanning" probe).

With ever-increasing demands on efficiency, quality and miniaturisation in various fields of manufacture, including aerospace and automotive, the accurate formation of very small features to a particular design specification is becoming more and more critical. Therefore, there is increasing demand to be able to verify accurate profile information about such small features to ensure that they have been formed in a part in accordance with the design specification. However, the dimensional measurement of very small features presents many challenges. Threaded features (i.e. one or more helical grooves) extending around a boss or a bore are a particularly common feature which manufactures want to form and measure but find difficult to do so, especially in a cost-efficient and time-efficient manner. For instance, the inventors were faced with the challenge of determining the dimensions of specific features on a part, the nominal length and/or depth of which can be around 200µm (microns), which is approximately the same size as the width of a human head-hair. Due to issues faced with accurately measuring small features, such features would normally be measured on a dedicated profilometer such as the Mitutoyo CV-4500.

US2011/277543 describes an apparatus having a roughness sensing system and a roughness measurement sensor, having a slide element and a probe tip. The slide element is arranged on an extreme end of a probe pin in the form of a scan-slide element. The probe tip is integrated into the probe pin, and the distance between the scan-slide element and the probe tip is predetermined. The roughness sensing system is a 1D-, 2D- or 3D-scanning system having a parallelogram configuration. The apparatus further has a serving device which enables moving the probe pin together with the scan-slide element and the probe tip jointly over a surface to be scanned.

US5105552 describes a procedure and a device for displacement by sliding a mobile support on which accessories such as a part, a sensor or a tool can be fitted over a reference surface, such that distributed forces can be applied to this mobile support from the bottom upwards.

The present invention relates to a method of measuring small features on a coordinate positioning apparatus (such as a CMM or machine tool), using a contact probe.

According to a first aspect of the invention there is provided a method of inspecting at least one feature of a part, the feature having a predetermined nominal shape (e.g. it was formed in accordance with a predetermined design specification to have a particular shape, and therefore, for example, has particular predetermined nominal geometrical dimensions, such as a predetermined nominal length, and/or depth, as well as, optionally, a predetermined position), comprising: i) loading a contact probe onto a probe mount of a coordinate positioning apparatus which is configured to facilitate the exchanging of probes thereon and which is configured to facilitate relative movement of the probe mount and the part in three orthogonal degrees of freedom (optionally, during a measurement operation, in other words, during the collection of measurement points on the surface of a part), the contact probe comprising a reference/datum member for engaging the part and a stylus, the stylus being deflectable relative to the reference member and having a tip for contacting the surface to be measured, wherein the relative position of the tip and the reference/datum member is transduced; ii) bringing the reference/datum member and the stylus of the contact probe into contact with the part on one side of the feature, and then causing the deflectable measuring stylus to traverse the feature whilst collecting measurement data concerning the relative position of tip and the reference/datum member; and iii) extracting (geometric) dimension information about the feature from the measurement data. Optionally, this can also comprise comparing the extracted (geometric) dimension information to nominal dimension information for feature of the part (e.g. which can be obtained from the design specification for the feature/part).

The invention differs from traditional techniques for obtaining geometric dimensional measurements of a part in that the contact probe has a reference/datum member which is placed on the part being measured. Whilst such reference/datum members are known for surface finish/roughness probes such as the SFP2 probe available from Renishaw plc (e.g. see International Patent Application PCT/GB2018/050398 - publication no. WO2018/150178) to obtain surface roughness measurements (e.g. such as the Ra value - the "arithmetical mean roughness value"), before the advent of the present invention it was not known to use such a configuration to obtain geometrical dimensional measurement information about specific predetermined geometrical features of an artefact. Indeed, typically, such probes would not be used to obtain geometrical dimensional measurement information about specific predetermined geometrical features of an artefact because such probes were only intended to be used to obtain relative surface roughness information. For instance, with the above mentioned SFP2 probe available from Renishaw plc, a skid is provided which engages the surface and follows the stylus as it is moved along the surface, and is designed to mechanically filter out profile information about the surface, such that only surface roughness information is obtained. Indeed, the measuring part of the SFP2 product (i.e. the skid, stylus and stylus-transducer) is deflectable relative to the mount via which it is mounted to the CMM (in order to let the probe to conform to undulating surfaces when the CMM scans in a straight line), and such deflections are not transduced, thereby increasing uncertainty in the actual absolute position of the stylus tip in the three-dimensional measurement space of the CMM.

Nevertheless, it has been found advantageous to use a contact probe which has a reference/datum member which is placed on the part being measured, because the reference/datum member can steady the contact probe against the part, thereby reducing the size of the metrology loop. Accordingly, the provision of the reference/datum member reduces noise which would otherwise be present on the measurements data due to the vibrations of the coordinate positioning apparatus on which the probe is mounted, and therefore enables the accurate measurement of much smaller features than would be otherwise be possible.

Whilst such features could be measured on a dedicated profilometer, there is demand for measuring such features on a coordinate positioning apparatus such as a CMM or a machine tool, in order to: i) reduce the cost of purchasing a dedicated profilometer; ii) avoid the burden of transferring to, and setting the part up on, a dedicated profilometer; and/or iii) be able to measure all features of the part on the one machine (e.g. the small features using the invention as well as measure other aspects of the part using different probes mounted on the probe mount). Not only can this save time but, if desired, it can enable the measurement of such features to be integrated with the other measurements performed on the CMM or machine tool. Accordingly, the method can comprise combining measurements obtained by different types of measurement probe which were mounted on the coordinate positioning apparatus (i.e. combining measurements obtained by the contact probe comprising a reference/datum member and measurements obtained by another probe not having a reference/datum member for engaging the part). Optionally, the method can comprise providing a measurement report to an end user which comprises measurement information obtained by the contact probe comprising a reference/datum member, as well as measurement information obtained by another probe (i.e. not having a reference/datum member for engaging the part) which was mounted on the coordinate positioning apparatus at a different time. Accordingly, the method can comprise obtaining other measurements of the part using a different probe (not having a reference/datum member for engaging the part) mounted on the coordinate positioning apparatus.

Although such small features could in theory be measured on a coordinate positioning apparatus by a non-contact optical probe, in practice such optical probes can be very expensive and heavy, and are not suitable for measuring all types of features due to the optical properties of the surface causing reflection/scattering issues.

The coordinate positioning apparatus could comprise a computer-controlled positioning apparatus, for example a computer numerically controlled (CNC) positioning apparatus. Suitable positioning apparatus include coordinate measuring machines (CMM) and machine tools. The positioning apparatus could comprise a Cartesian positioning apparatus (examples of which include bridge, portal and gantry CMMs) or non-Cartesian positioning apparatus (examples of which include arms, and parallel-kinematic apparatus such as hexapods). A Cartesian position apparatus typically comprises three linear orthogonally arranged moveable axes, arranged in series. A non-Cartesian position apparatus can comprise linearly moveable axes, but they are not necessary arranged orthogonally, nor in series, but nevertheless can be operated together so as to provide relative linear motion of the probe mount and part in three orthogonal degrees of freedom. In any case, the coordinate positioning apparatus is configured to facilitate relative movement of the probe mount (and hence a probe mounted thereon) and a part to be inspected in three orthogonal degrees of freedom. In particular, the coordinate positioning apparatus is configured to effect and monitor (in other words, "track") changes in position of the probe mount (and hence a probe mounted thereon) and a part to be inspected in three orthogonal linear degrees of freedom (e.g. x, y, z). Accordingly, the coordinate positioning apparatus can comprise actuators (e.g. motors) for effecting such a change in position and transducers (e.g. position measurement encoders) for measuring the relative position of the probe mount (and hence of a contact probe mounted thereon) and a part being inspected in three orthogonal linear degrees of freedom. Accordingly, the coordinate positioning apparatus can be configured to control and monitor the relative position of the probe mount (and hence of a probe mounted thereon) and a part in three orthogonal linear degrees of freedom during a measurement operation (i.e. during the collection of measurement points on the surface of a part). Optionally, this means that, if desired, the measurement data obtained by the contact probe could be combined with the machine position data to determine the position of the measured surface points in three-dimensional space (i.e. within the coordinate positioning apparatus' three-dimensional measurement volume).

As will be understood, the positioning apparatus can comprise devices/parts other than the (e.g. movement) structure on which the contact probe is mounted. For example, the positioning apparatus can comprise one or more processor devices, for example controllers and/or computers, which are in communication with the structure on which the contact probe is mounted. Such devices could be physically separate to the structure on which the contact probe is mounted. Such devices could comprise one or more input and/or output devices, e.g. a human-computer interface.

Preferably, the contact probe comprises a skidded probe. In other words, the reference/datum member can comprise a skid member. As will be understood, a skid member is a portion of the contact probe which is configured to be biased against the surface of the part being inspected and to slide over the surface of the part as the contact probe is moved relative to the part. The skid therefore moves with the stylus, parallel to the measurement line along which the stylus is moved, and the stylus is able to deflect relative to the skid in a direction substantially perpendicular to the direction of the measurement line. As described in more detail below, the stylus might be configured to pivot about a point relative to the skid, in which case the stylus is configured to deflect relative to the skid in an arcuate motion. As will be understood, the skid could be located in-front of, behind, to the side of, or surround the stylus.

The part-engaging face of the skid can be substantially flat. Optionally, the part-engaging face can have a slight radius of curvature in at least one dimension. As will be understood, the radius of curvature can be dependent on many things, such as the length of the skid (e.g. its dimension parallel to the direction along which the stylus will be moved to obtain measurement data) and for instance the type of feature the probe will be used to measure. For instance, in the case the feature is a recess (such as a groove, channel, hole, depression), it can be preferred that the length of the skid is greater than the predetermined/nominal length of the feature (such that the skid will not substantially fall into the recess). For example, it can be preferred that the ratio of the nominal length of the skid to the length of the recessed feature is at least 2:1, more preferably at least 3:1, especially preferably at least 4:1, for example not less than 5: 1. Typically, a useful ratio of the length of the skid to its radius of curvature is about 1: 10 (e.g. such that a skid having a length of 4mm will have a radius of curvature of approximately 40mm). Accordingly, preferably the ratio of the length of the skid to its radius of curvature is not significantly bigger than this, e.g. preferably is at least 1:5, more preferably at least 1:7, for example, at least 1: 10. Furthermore, typically, a useful ratio of the skid radius to the length of the recessed feature to be measured is at least 25:1, more preferably at least 40:1, for example at least 50:1.

The height (or depth) of the feature (e.g. recess) to be measured could be at least 50µm, for example at least 100 µm, in particular at least 125 µm. Optionally, the height (or depth) of the feature (e.g. recess) is not more than 1500µm, for instance not more than 1000µm, for example not more than 500µm, optionally not more than 200µm. The invention can be particularly beneficial for features having a height (e.g. depth) in the region of 125µm to 200µm. The length of the feature (e.g. recess) to be measured could be at least 50µm for example at least 100 µm, in particular at least 125 µm. Optionally, the length of the feature (e.g. recess) to be measured is not more than 1500µm, for instance not more than 1000µm, for example not more than 500µm, optionally not more than 200µm The invention can be particularly beneficial for features having a length in the region of 125µm to 200µm.

The contact probe could comprise a transducer member (or "part") which is held distal from its mount/interface with the coordinate positioning apparatus, e.g. via an extension member/bar. The transducer member can be a part of the contact probe comprising the stylus and at least one sensor for monitoring the deflection of the stylus. The transducer member could be mounted to the extension member/bar by a joint, for example an articulatable joint, (which could be referred to as a "knuckle j oint"). This joint (the "knuckle j oint") could be a manually manipulatable j oint. The knuckle joint could, for example, facilitate a change in the angular configuration of the transducer member and the extension member/bar.

The contact probe which is mounted on the coordinate positioning apparatus' probe mount could have its own actuator (e.g. motor) (e.g. a linear actuator) for causing the stylus to traverse the feature whilst collecting measurement data concerning the relative position of tip and the reference member. However, preferably, the step of causing the stylus to traverse the feature whilst collecting measurement data concerning the relative position of tip and the reference member, is effected by the coordinate positioning apparatus moving the probe mount on which the probe is (exchangeably) mounted. In this case, the need for the contact probe to have its own actuator for causing such motion is removed, and so the contact probe could be configured without such an actuator.

The probe mount could be provided on an articulated member comprising at least one axis of rotation. The articulated member could comprise at least two axes of rotation, for instance two orthogonal degrees of freedom. Preferably, the contact probe and/or articulated member are configured such that the reference/datum member and the stylus can be rotated about at least three axes. In this case, the articulated member on which the contact probe is mounted can provide at least two of the at least three axes of rotation. For example, a particularly preferred setup is where the articulated member on which the contact probe is mounted provides two orthogonal axes of rotation and the contact probe itself provides a third axis of rotation. Accordingly, the contact probe could comprise a motor for effecting rotation about the third axis of rotation. Such a third axis of rotation can be particularly useful when the contact probe senses the surface unidirectionally. The above described "knuckle joint" can be provided in addition to this motorised third axis of rotation.

Accordingly, the step of causing the stylus to traverse the feature can comprise actuating at least one of the coordinate positioning apparatus's axes of motion. In other words, the step of causing the stylus to traverse the feature can comprise actuating at least one of rotary axes of the articulated member (if present) and/or one or more of the linear axes the coordinate positioning apparatus. Accordingly, in the case one or more linear axes of the coordinate positioning apparatus is actuated, the whole probe mount (and if provided, the whole articulated mechanism) is moved/translated by the motion along the linear axes of the coordinate positioning apparatus. As will be understood, more than one linear axis of the coordinate position apparatus can be operated at any one time, for instance so as to effect non-linear movement.

The stylus of the contact probe can be mounted on an elongate arm which is configured to pivot about a point distal the stylus' tip such that the tip can pivot relative to the reference/datum member about said pivot point. In this case, preferably the method comprises applying a non-linear correction to the measurement data obtained by the contact probe to remove skew caused by the pivoting of the stylus.

The part can comprise a plurality of features to be measured along the line along which the stylus is moved during the measurement operation. Accordingly, the method can comprise causing the deflectable measuring stylus to traverse the plurality of features whilst collecting measurement data concerning the relative position of tip and the reference/datum member. The method can further comprise extracting dimension information about one or more of the plurality of features from the measurement data. The method can further comprise comparing the extracted dimension information to the design specification for the part.

The plurality of features can comprise different sections of a single formation of the part. For instance, the plurality of features can comprise different sections of a (continuous) thread of a threaded member of the part.

The method of the invention has been found to be particularly useful when the feature comprises a recessed feature, such as a groove, channel, hole, depression or the like.

Step i) can comprise automatically loading (i.e. under the control of a computer/controller/processor device) the contact probe onto the mount of the coordinate positioning apparatus, e.g. loaded from a rack located within the coordinate positioning apparatus' measurement volume. The contact probe and/or the probe mount could comprise one or more magnets for retaining the contact probe on the probe mount. Accordingly, the contact probe can be magnetically retained on the probe mount. The contact probe and the probe mount can comprise corresponding features of a kinematic coupling joint.

According to a second aspect of the invention there is provided a coordinate positioning apparatus (e.g. a CMM or machine tool) for inspecting at least one feature of a part having a predetermined nominal shape. The coordinate positioning apparatus comprises a probe mount on which different probes can be exchangeable mounted. The coordinate positioning apparatus is configured such that the probe mount and the part can be relatively moved in three orthogonal degrees of freedom. A contact probe is mounted on the probe mount, wherein the contact probe comprises a reference member for engaging the part, and the contact probe further comprises a stylus which is deflectable relative to the reference member and which has a tip for contacting the surface to be measured. The contact probe further comprises a transducer for transducing the relative position of the tip and the reference member. The coordinate positioning apparatus further comprises a controller which is configured to bring the reference member and the stylus of the contact probe into contact with the part on one side of the feature to be inspected and configured to cause the stylus to traverse the feature whilst collecting measurement data concerning the relative position of tip and the reference member. The apparatus further comprises one or more processor devices configured to extract dimension information about the feature from the measurement data, and to compare the extracted dimension information to nominal dimension information for the nominal shape of the feature of the part. Aspects described above in connection with the method of the invention are equally applicable to the apparatus.

Embodiments of the invention will now be described, by way of example only, with reference to the following drawings, in which:
Figure 1 shows a schematic isometric view of a coordinate measuring machine (CMM) on which a contact probe is mounted;
Figure 2 is a close-up view of the contact probe on the articulating probe head of the CMM of Figure 1;
Figure 3 shows a section through axes A and B of Figure 2;
Figure 4 shows the contact probe of Figures 1 to 3 in more detail;
Figure 5 shows a section through the contact probe of Figure 4;
Figure 6 shows an example process in accordance with the present invention;
Figure 7(a) to (d) illustrate different steps of the process of Figure 6 using the contact probe of Figure 4;
Figure 8 illustrates the motion of the skid of the contact probe during the measurement of the artefact shown in Figure 7;
Figure 9 illustrates how the stylus of the contact probe swings about a pivot point during the measurement of the artefact shown in Figure 7; and
Figure 10(a) illustrates the measurement data of the artefact of Figure 7 pre- and post-correction; and
Figures 10(b) and (c) illustrates the effect of skew on the measurement data of other types of recessed features obtained using the contact probe of Figures 1 to 5.

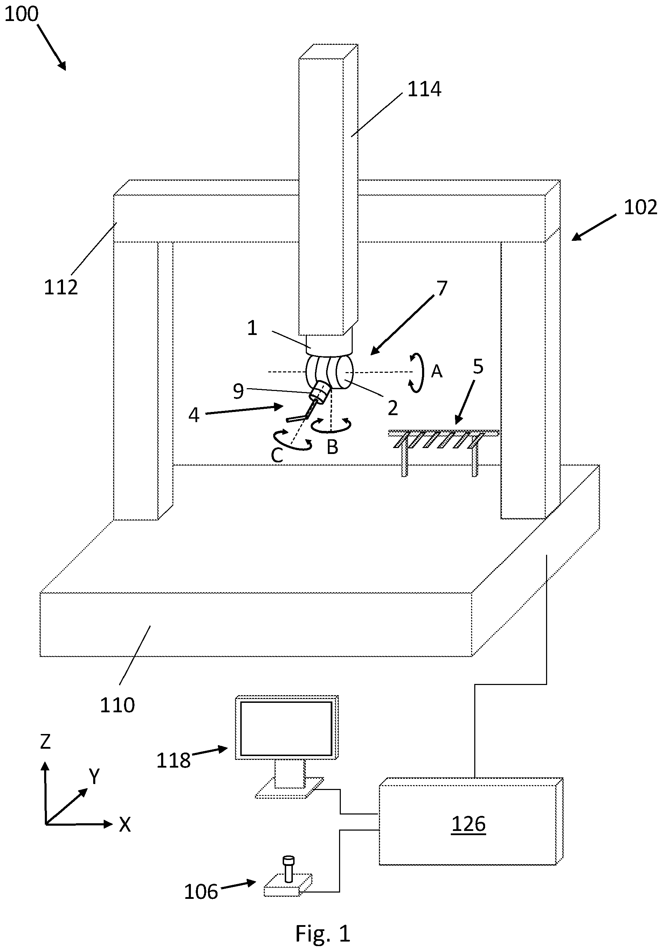

Referring to Figure 1 there is shown a positioning apparatus 100 comprising a movement structure in the form of a coordinate measuring machine ("CMM") 102. The CMM 102 comprises a base 110 on which a part to be inspected can be placed, a supporting frame 112, and a quill 114. Motors (not shown) are provided to move the quill 114 along the three mutually orthogonal axes X, Y and Z. The quill 114 holds an articulated member or "head" 7, which in turn supports a contact probe 4. The articulated head 7 facilitates rotation of the contact probe 4 about two mutually orthogonal axes of rotation A, B relative to the quill 114.

The positioning apparatus 100 also comprises a controller 126 for controlling the operation of the CMM 102 and articulated head 7 (either manually, e.g. via an input device such as joystick 106, or automatically, e.g. under the control of an inspection program). A display device 118 can be provided for aiding user interaction with the controller 126. The controller 126 could, for example, be a dedicated electronic control system and/or may comprise a personal computer.

In this embodiment, the articulated head 7 is a continuous scanning articulating head, such as the REVO articulated head available from Renishaw plc. As will be understood, a continuous scanning head enables orientation of a device mounted on it at substantially any angle about at least one axis (within its range of motion) and are often described as providing a near infinite number of angular orientations (within its range of motion). Also, the orientation of the measurement device about an axis of a continuous scanning head can be changed during measurement (e.g. for a contact probe, whilst the contact probe is in contact with an object being inspected and acquiring measurement information such as stylus deflection signals). In contrast, an indexing head has a discrete number of defined ("indexed") positions at which the measurement device mounted on it can be locked. With an indexing head, the orientation of the measurement device can be changed, but not during the acquisition of measurement data.

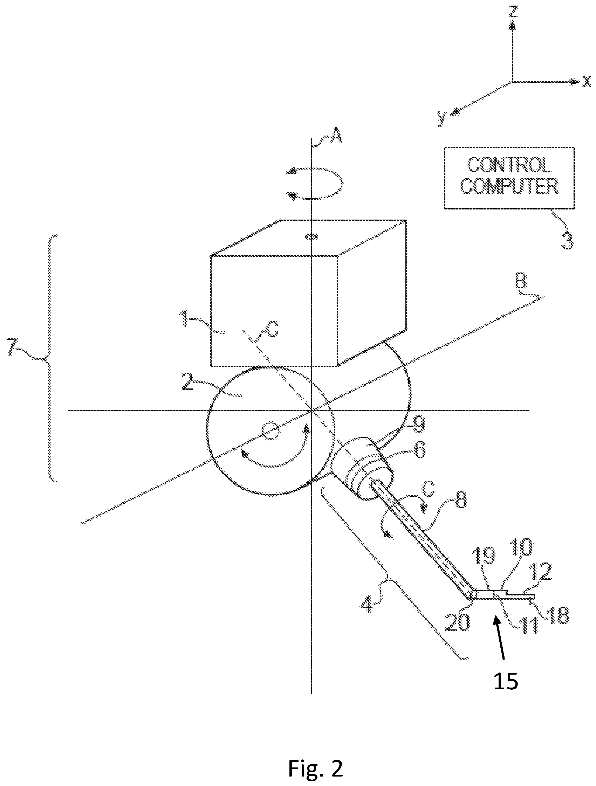

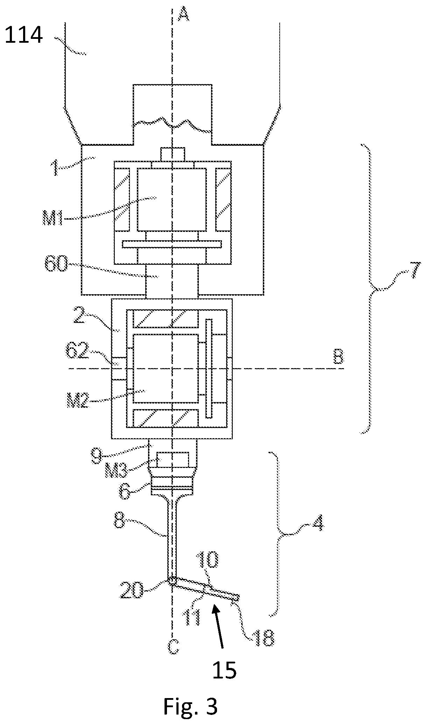

Figure 2 is a close-up view of the articulating probe head 7 and Figure 3 shows a section through the articulating head 7 and the contact probe 4. The contact probe 4 includes a transducer member 15 which is described in more detail below.

The articulating probe head 7 comprises first and second housing members 1 and 2 respectively. The first housing member 1 is adapted for attachment to a position determining apparatus, for example to the quill 114 of a CMM. As shown in Figure 3, the housing member 1 houses a motor M1 for effecting angular displacement of a first shaft 60 about the first axis A. Attached to the first shaft 60 is the second housing member 2, which houses a motor M2 for effecting angular displacement of a second shaft 62 about the second axis B. The contact probe 4 is attached to the second shaft 62 for rotation therewith.

Although not shown, measurement encoders may be provided for measuring the relative positions of the base 110, frame 112, quill 114 and also the first 1 and second 2 housing members of the articulated head 7 so that the position of the contact probe 4 relative to a workpiece located on the base 110 can be determined.

The contact probe 4 includes an elongate extension member 8 which holds the transducer member 15. The extension member 8 extends generally along an axis C, transverse to and intersecting the axis B. It is automatically exchangeably attached to and detached from the articulated head 7 via a housing 9 of the contact probe 4. The articulated head 7 (e.g. the second housing member 2) and the contact probe 4 (e.g. the housing 9) can comprise corresponding parts of a kinematic coupling joint of a known type, to facilitate (e.g. automated) attaching and detaching of the contact probe 4. As will be understood, a kinematic mount ensures that the contact probe 4 is repeatably located with respect to the articulated head 7. The housing 9 may optionally contain a motor M3 which rotates the extension member 8 about the axis C, again controlled by the program in the controller 126, so that the transducer member 15 can address differently oriented workpiece surfaces.

In the embodiment described, the contact probe 4 is removably mounted (e.g.as mentioned above, using a kinematic mount) on the articulated head 7. In the embodiment described the contact probe 4 can be held on the articulated head 7 by the use of corresponding magnets (not shown) provided on or in the contact probe's housing 9 and on the articulated head 7. The contact probe 4 could be automatically mountable/removable, e.g. from/to a probe storage rack 5 located in the CMM's movement volume.

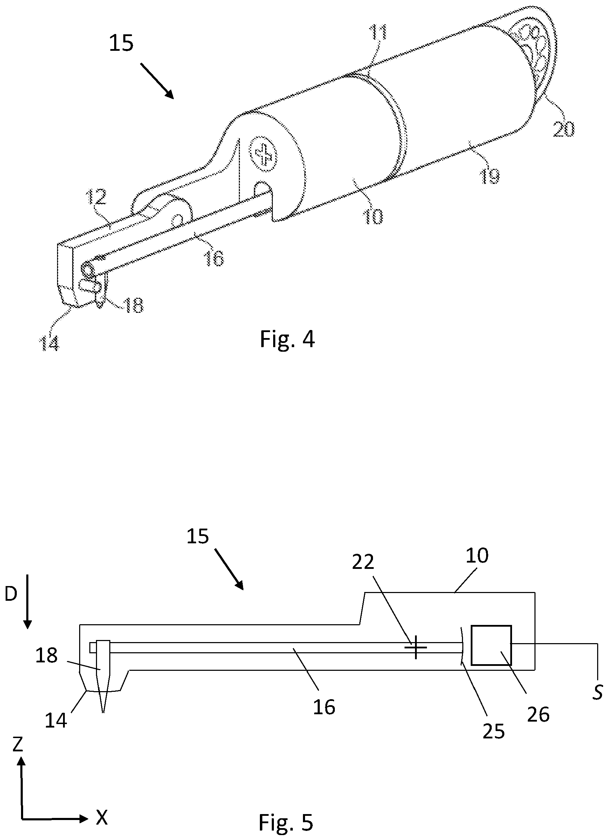

The transducer member 15 is shown in more detail in Figures 4 and 5 and comprises a housing 10, from one end of which extends a finger 12. A reference member 14 (in this embodiment a "skid" 14) is provided at the end of the finger 12, for contacting the surface of an artefact to be measured. An arm 16 extends along the finger 12, and is mounted deflectably within the housing 10, for example pivotable about crossed planar springs 22. At the end of the pivotable arm 16 is a stylus 18. The stylus 18 is biased by the springs 22 to be deflectable and to project slightly beyond the skid 14. This means that when the probe is moved into contact with the surface of an artefact in the direction of arrow D, a tip of the stylus 18 contacts the surface slightly before the skid 14. The stylus 18 and pivotable arm 16 deflect about the springs 22 to permit this. The stylus comprises a generally elongate/straight/cylindrical portion which at a first end thereof is connected to the arm 16, and also comprises at a second end thereof a conical tip portion. The cone angle of the conical tip portion is approximately 30°. In this embodiment the stylus 18 and skid 14 are co-located along the length of the contact probe. However, this need not necessarily be the case. For instance, the stylus 18 can be spaced apart from the skid 14, longitudinally (e.g. by making the stylus arm 16 substantially shorter than that shown in Figure 5).

The housing 10 is spring-mounted to a support 19 at a joint 11. This permits the skid 14 to deflect when loaded onto a surface which is to be measured. Such a joint is advantageous because it lets the probe conform to undulating surfaces when the CMM scans in a straight line. It keeps the skid in contact with the part, but does not over-stress the probe in the event of over-deflection. Due to space constraints, the joint is not transduced.

At its other end, the support 19 is attachable to the extension member 8 of the contact probe 4, for example via a knuckle joint 20 which can be manually positioned to adjust the orientation of the probe for access to workpiece surfaces at different locations and orientations. Prior to a measurement operation, the contact probe 4 can be calibrated by using another probe (not shown, but for example, by a probe mounted on the rack 5) to measure the contact probe 4 (e.g. the extension member 8 and the transducer member 15) so as to determine the transducer member's 15 position and orientation with respect to the CMM 102, in accordance with the method described in WO2018/150169.

The transducer member 15 can be moved by the CMM 102 and/or the articulating head 7, under the control of a program in the controller 126 of the CMM. The controller 126 can thus operate the CMM 102 (e.g. one or more of its linear axes and/or one or more of the rotary axes of the articulated head 7) so as to bring the transducer member 15 into contact with a workpiece to be measured, and then drag the skid 14 and the tip of the stylus 18 along the surface. The resulting deflections of the stylus 18 relative to the skid 14 are measured by a transducer in the housing 10. The transducer produces a signal S which is passed back to the controller 126 which uses the signals S to determine dimensional information about the workpiece as described in more detail below.

In this embodiment, the transducer comprises a small encoder, comprising a scale 25 mounted on the end of the arm 16 distal the stylus 18 and a readhead 26. A light source within the readhead 26 projects light toward the scale 25 which diffracts and reflects light back toward the readhead 26 so as to produce interferences patterns which are detected by a sensor within the readhead 26. Motion of the arm 16 causes the interference pattern to move, which is sensed at the readhead, and converted into Sine and Cosine quadrature signals, 90 degrees out of phase with each other. The quadrature signals are used to generate a count of the relative position of the scale and readhead which is reported via the signal S to the controller 126.

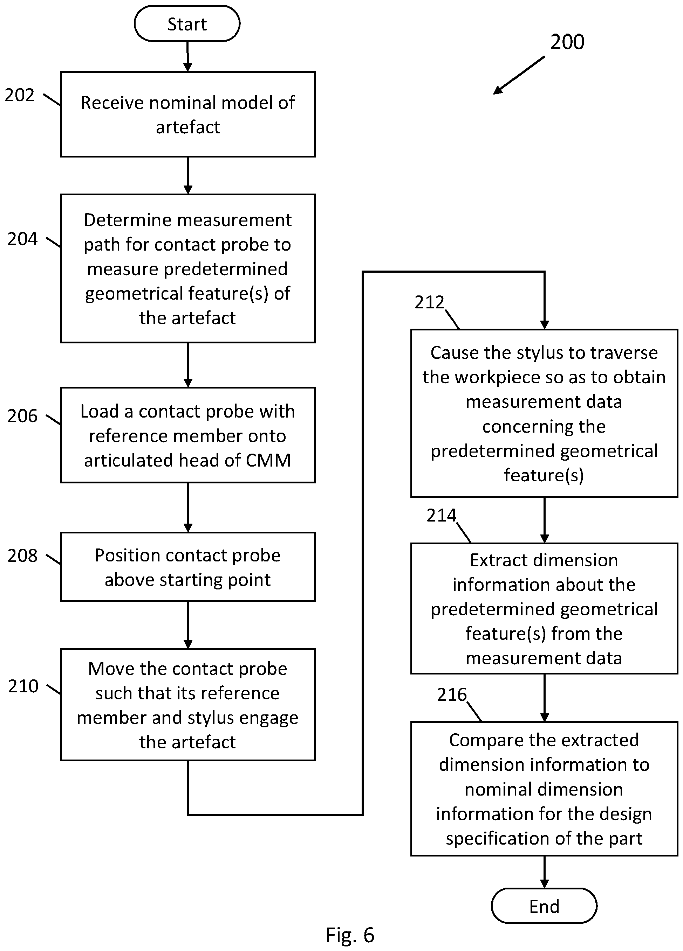

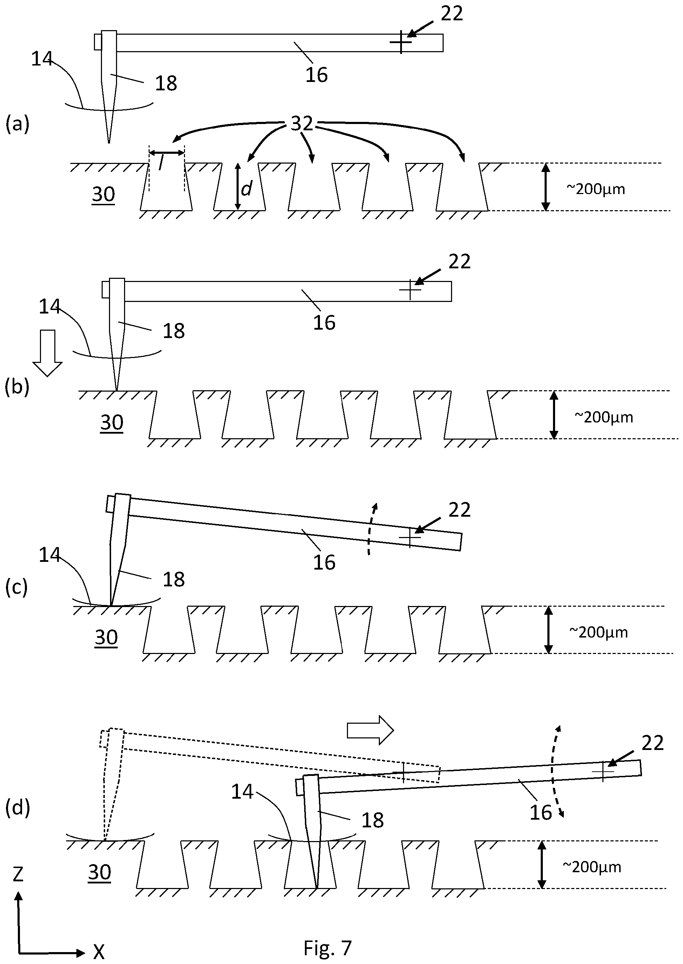

An example process 200 for inspecting an artefact in accordance with the method of the invention will now be described with reference to Figures 6 to 9. The process begins at step 202 with the controller 126 receiving a nominal model of an artefact (e.g. artefact 30 - see Figure 7) to be inspected. This could, for instance, be a computer-aided design (CAD) model of the artefact. The model could, for example, be retrieved from a local or remote storage device. As shown in Figure 7, the artefact 30 comprises a series predetermined geometrical features, in the form of a series of recesses 32.

Each feature 32 has been formed (e.g. machined) in the artefact's substrate in accordance with a design specification so as to have a particular predetermined geometrical shape, position, length "*l*", and depth "*d*". In this particular example, the sides of the recesses 32 are configured such that they are overhung in shape. These predetermined geometrical features 32 are to be contrasted with the surface finish (e.g. surface roughness) of the artefact's surface, the individual features of which do not have particular predefined geometrical shapes, positions, lengths or depths, and which this invention is not concerned with.

Step 204 comprises determining a desired measurement path along the surface of the artefact which incorporates one or more of the predetermined geometrical features of the artefact, and an associated control path which the controller 126 can use to automatically control the contact probe so as to measure along the measurement path. Step 206 then comprises loading the contact probe 4 comprising the reference member onto the articulated head 7 of the CMM 102. Preferably, this takes place automatically under the control of the controller 126, whereby the articulated head 7 is driven so as to pick up the contact probe 4 automatically from a rack 5 located in the CMM's 102 operating volume.

Step 208 then comprises operating the CMM 102 to position the contact probe 4 such that the contact probe's stylus 18 is located just above the starting point of the desired measurement path. This is schematically illustrated in Figure 7(a).

Step 210 comprises the controller 126 operating the CMM 102 to move the contact probe 4 so as to bring the contact probe's stylus 18 and reference member (in this case the skid 14) so as to engage the artefact 30. As shown in Figure 7(b) and 7(c), initially the stylus 18 will engage the surface of the artefact 30 before the skid 14 does. As illustrated in Figure 7(c), the action of continuing to operate the CMM 102 to move the contact probe 4 toward the surface of the artefact 30 after the stylus has engaged the surface causes the skid 14 to approach the surface until it also engages the surface. As a result, the stylus 14 rotates about its pivot point 22. At step 212, the controller 126 controls the CMM 102 so as to cause the stylus 18 and skid 14 to traverse the recesses 32 in the artefact 30. As illustrated in Figure 7(d), the stylus and arm 18 oscillate about the pivot point 22 as the stylus drops into and rises out of the recesses 32 in the artefact 30, with the transducer 26 outputting to the controller 126 a signal S indicative of the extent of rotation.

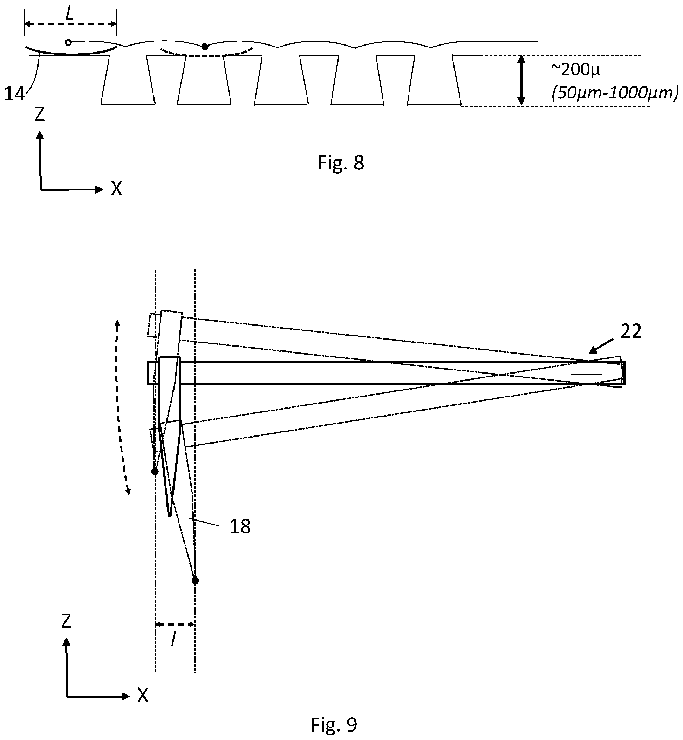

Step 214 comprises the controller 126 extracting dimension information about predetermined geometrical features. This is made more complicated by the fact that the measurement data obtained is relative measurement data (i.e. measured relative to the reference member/skid 14), and also due to the fact that the stylus 18 swings about a pivot point during measurement. For instance, as explained above, the skid 18 is free to deflect up and down slightly about its joint 11, and so as illustrated in Figure 8 it follows an undulated path as it repeatedly falls into the recesses 32 and rises out of them again. In this embodiment, the joint 11 is not transduced and so such deflections are an error on the measurement data. If the deflection/undulation is relatively small, then they can be ignored. This can be ensured by using a skid 14 which will not be able to fall too deeply into the recess (e.g. by having a sufficiently long skid and/or a skid with a sufficiently large radius of curvature).

Also, as illustrated by Figure 9, the stylus 18 swings about its pivot point 22 which means that the lateral position (in "x") of the very tip of the stylus 18 changes depending on its vertical position (in "z"). Accordingly, this can have a significant impact on the measurement data, in particular it can impart significant skew onto the measurement data.

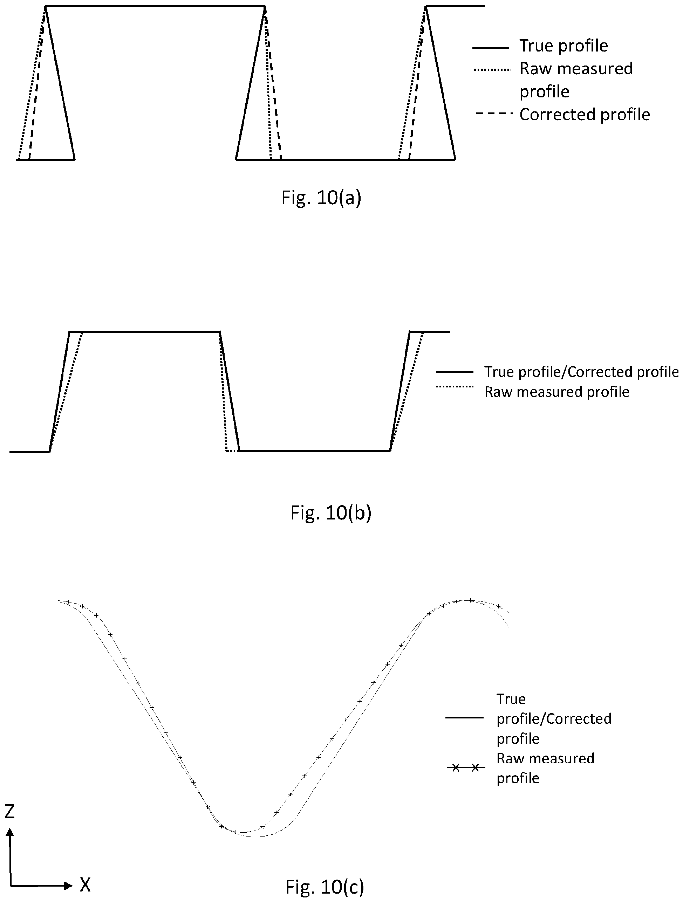

Accordingly, step 214 can comprise applying a non-linear correction of the measurement data obtained by the probe to remove skew caused by the swing of the stylus 18. Figure 10a illustrates the true profile of the actual part, as well as the raw measurement data obtained by the contact probe 4 which is skewed due to the swing of the stylus 18 about the pivot point 22, and the corrected measurement data wherein the effect of skew has been removed by a non-linear correction. As will be understood, such skew correction will be based on the mechanics of the contact probe, in particular the geometry of the stylus, such as the distance between the stylus 18 and the pivot point 22, and the length of the stylus 18.. As shown, due to the overhang, the corrected profile is not the same as the true profile, but information about the height and width of the recess can still be determined. Figures 10(b) and 10(c) illustrate the effect of skew on the measurement data obtained by the contact probe 4 due to the swing of the stylus 18 about the pivot point 22. As shown, for these types of features where there is no overhang, non-linear correction can be used such that the corrected measurement data is representative of the actual profile.

In any case, step 214 comprises extracting dimension information about the predetermined geometrical features (e.g. the recesses). Examples of such dimension information include the length and/or height of a recess of one or more features, and/or the distance between successive features.

Step 216 then comprises comparing the extracted dimension information to nominal dimension information for the design specification of the part. Such nominal dimension information could be obtained, for example, from a CAD model of the part, and/or from other sources such as from tolerance specification documentation. In particular, the height, length and position of individual features can be measured and compared the nominal dimension information, as well as aggregate values such as the pitch of an array of features. This can be used as part of an evaluation process to determine whether to accept or reject the artefact. It could also be used as to part of a manufacturing feedback process e.g. to determine whether additional working of the artefact is required, and if so, where/how much working is required, and/or to identify wear of the tool.

In the embodiment described, the artefact 30 is described as having a series of recesses 32. As will be understood, these could be a series of discrete recesses (e.g. straight elongate grooves formed in a flat part). Alternatively, the series of recesses 32 as depicted in Figure 7 could be the result of single helical groove which extends along a cylindrical part, and therefore each recess 32 depicted in Figure 7 is a cross-section of different points along the helix.

## Claims

1. A method of inspecting at least one feature (32) of a part (30), the at least one feature having a predetermined nominal shape, comprising:
i) loading a contact probe (4) onto a probe mount of a coordinate positioning apparatus (100) which is configured to facilitate the exchanging of probes thereon and which is configured to facilitate relative movement of the probe mount and the part in three orthogonal degrees of freedom, the contact probe comprising a reference member (14) for engaging the part, and the contact probe further comprising a stylus (18), the stylus being deflectable relative to the reference member and having a tip for contacting the surface to be measured, wherein the relative position of the tip and the reference member is transduced;
ii) bringing the reference member and the stylus of the contact probe into contact with the part on one side of the feature, and then causing the stylus to traverse the feature whilst collecting measurement data concerning the relative position of the tip and the reference member; and
iii) extracting dimension information about the feature from the measurement data, and comparing the extracted dimension information to nominal dimension information for the nominal shape of the feature of the part.

2. A method as claimed in claim 1, in which the contact probe (4) comprises a skidded probe, the reference member comprising a skid (14) which traverses the feature (32) with the stylus (18).

3. A method as claimed in any preceding claim, in which the height of the feature (32) is at least 50µm, and optionally in which the length of the feature is at least 50µm.

4. A method as claimed in any preceding claim, in which the step of causing the stylus (18) to traverse the feature (32) whilst collecting measurement data concerning the relative position of the tip and the reference member (14), is effected by the coordinate positioning apparatus (100) moving the probe mount on which the probe is exchangeably mounted.

5. A method as claimed in any preceding claim, in which the probe mount is provided on an articulated member (7) comprising at least one axis of rotation.

6. A method as claimed in claim 5, in which the contact probe (4) and/or articulated member (7) are configured such that the reference member (14) and the stylus (18) can be rotated about at least three axes.

7. A method as claimed in claim 6, in which the articulated member (7) on which the contact probe (4) is mounted provides at least two of the at least three axes of rotation.

8. A method as claimed in claim 5, 6 or 7, in which causing the stylus (18) to traverse the feature (32) comprises actuating at least one of axes of the articulated member (7) and/or one or more of the linear axes of the coordinate positioning apparatus (100).

9. A method as claimed in any preceding claim, in which stylus (18) is mounted on an elongate arm (16) which is configured to pivot about a point distal the stylus' tip such that the tip can pivot relative to the reference member (14) about said pivot point.

10. A method as claimed in claim 9, comprising applying a non-linear correction to the measurement data obtained by the contact probe (4) to remove skew caused by the pivoting of the stylus (18).

11. A method as claimed in any preceding claim, in which the part (30) comprises a plurality of features (32) formed in accordance with a predetermined design specification, and in which the method comprises causing the stylus (18) to traverse the plurality of features whilst collecting measurement data concerning the relative position of the tip and the reference member (14), and extracting dimension information about one or more of the plurality of features from the measurement data, and comparing the extracted dimension information to the design specification for the part.

12. A method as claimed in claim 11, in which the plurality of features (32) comprises different sections of a thread of a threaded member of the part (30).

13. A method as claimed in any preceding claim, in which the feature (32) comprises a recessed feature, for example a groove.

14. A method as claimed in any preceding claim, in which step i) comprises causing the contact probe (4) to be loaded automatically onto the mount of the coordinate positioning apparatus (100) from a rack located within the coordinate positioning apparatus' measurement volume.

15. A method as claimed in any preceding claim, in which the nominal dimension information comprises at least one of the height, length and position of the feature (32).

16. An apparatus comprising a coordinate positioning apparatus (100) for inspecting at least one feature (32) of a part (30) having a predetermined nominal shape, the coordinate positioning apparatus comprising a probe mount on which different probes can be exchangeably mounted, the coordinate positioning apparatus being configured such that the probe mount and the part can be relatively moved in three orthogonal degrees of freedom, wherein a contact probe is mounted on the probe mount, and wherein the contact probe comprises a reference member (14) for engaging the part, and the contact probe further comprising a stylus (18) which is deflectable relative to the reference member and which has a tip for contacting the surface to be measured, the contact probe further comprising a transducer for transducing the relative position of the tip and the reference member, the coordinate positioning apparatus further comprising a controller (126) which is configured to bring the reference member and the stylus of the contact probe into contact with the part on one side of the feature to be inspected and configured to cause the stylus to traverse the feature whilst collecting measurement data concerning the relative position of tip and the reference member, the apparatus further comprising one or more processor devices configured to extract dimension information about the feature from the measurement data and to compare the extracted dimension information to nominal dimension information for the nominal shape of the feature of the part.

## Patentansprüche

1. Verfahren zum Prüfen mindestens eines Merkmals (32) eines Teils (30), wobei das mindestens eine Merkmal eine vorbestimmte Nennform aufweist, umfassend:
i) Laden eines Kontakttasters (4) auf eine Tasterhalterung einer Koordinatenpositionierungsvorrichtung (100), die konfiguriert ist, um das Austauschen der Taster darauf zu erleichtern, und die konfiguriert ist, um eine relative Bewegung der Tasterhalterung und des Teils in drei orthogonalen Freiheitsgraden zu erleichtern, wobei der Kontakttaster ein Referenzelement (14) zum Eingriff mit dem Teil umfasst, und der Kontakttaster ferner einen Taststift (18) umfasst, wobei der Taststift relativ zu dem Referenzelement ablenkbar ist und eine Spitze, um mit der zu messenden Oberfläche in Kontakt zu treten, aufweist, wobei die relative Position der Spitze und des Referenzelements umgewandelt wird;
ii) Inkontaktbringen des Referenzelements und des Taststifts des Kontakttasters mit dem Teil auf einer Seite des Merkmals und dann Bewirken, dass der Taststift das Merkmal durchquert, während Messdaten bezüglich der relativen Position der Spitze und des Referenzelements gesammelt werden; und
iii) Extrahieren von Abmessungsinformationen über das Merkmal aus den Messdaten und Vergleichen der extrahierten Abmessungsinformationen mit Nennabmessungsinformationen für die Nennform des Merkmals des Teils.

2. Verfahren nach Anspruch 1, wobei der Kontakttaster (4) einen gleitenden Taster umfasst, wobei das Referenzelement ein Gleitstück (14) umfasst, das das Merkmal (32) mit dem Taststift (18) durchquert.

3. Verfahren nach einem der vorhergehenden Ansprüche, wobei die Höhe des Merkmals (32) mindestens 50 µm beträgt und wobei optional die Länge des Merkmals mindestens 50 µm beträgt.

4. Verfahren nach einem der vorhergehenden Ansprüche, wobei der Schritt des Bewirkens, dass der Taststift (18) das Merkmal (32) durchquert, während Messdaten bezüglich der relativen Position der Spitze und des Referenzelements (14) gesammelt werden, durch die Koordinatenpositionierungsvorrichtung (100) bewirkt wird, die die Tasterhalterung bewegt, auf der der Kontakttaster austauschbar montiert ist.

5. Verfahren nach einem der vorhergehenden Ansprüche, wobei die Tasterhalterung 5 auf einem Gelenkelement (7) bereitgestellt ist, das mindestens eine Drehachse umfasst.

6. Verfahren nach Anspruch 5, wobei der Kontakttaster (4) und/oder das Gelenkelement (7) so konfiguriert sind, dass das Referenzelement (14) und der Taststift (18) um mindestens drei Achsen gedreht werden können.

7. Verfahren nach Anspruch 6, wobei das Gelenkelement (7), auf dem der Kontakttaster (4) montiert ist, mindestens zwei der mindestens drei Drehachsen bereitstellt.

8. Verfahren nach einem der Ansprüche 5, 6 oder 7, wobei das Veranlassen, dass der Taststift (18) das Merkmal (32) durchquert, ein Betätigen mindestens einer der Achsen des Gelenkelements (7) und/oder einer oder mehrerer der linearen Achsen der Koordinatenpositionierungsvorrichtung (100) umfasst.

9. Verfahren nach einem der vorhergehenden Ansprüche, wobei der Taststift (18) an einem länglichen Arm (16) montiert ist, der so konfiguriert ist, dass er um einen Punkt distal zu der Spitze des Taststifts schwenkt, so dass die Spitze relativ zu dem Referenzelement (14) um den Schwenkpunkt schwenken kann.

10. Verfahren nach Anspruch 9, umfassend ein Anwenden einer nichtlinearen Korrektur auf die von dem Kontakttaster (4) erhaltenen Messdaten, um durch das Schwenken des Taststifts (18) verursachten Versatz zu entfernen.

11. Verfahren nach einem der vorhergehenden Ansprüche, wobei das Teil (30) eine Vielzahl von Merkmalen (32) umfasst, die gemäß einer vorbestimmten Designspezifikation gebildet sind, und wobei das Verfahren umfasst:
Veranlassen, dass der Taststift (18) die Vielzahl von Merkmalen durchquert, während Messdaten bezüglich der relativen Position der Spitze und des Referenzelements (14) gesammelt werden, und Extrahieren von Abmessungsinformationen über eines oder mehrere der Vielzahl von Merkmalen aus den Messdaten und Vergleichen der extrahierten Abmessungsinformationen mit der Designspezifikation für das Teil.

12. Verfahren nach Anspruch 11, wobei die Vielzahl von Merkmalen (32) verschiedene Abschnitte eines Gewindes eines Gewindeelements des Teils (30) umfasst.

13. Verfahren nach einem der vorhergehenden Ansprüche, wobei das Merkmal (32) ein vertieftes Merkmal, zum Beispiel eine Nut, umfasst.

14. Verfahren nach einem der vorhergehenden Ansprüche, wobei der Schritt i) das Veranlassen umfasst, dass der Kontakttaster (4) von einem Gestell, das sich innerhalb des Messvolumens der Koordinatenpositionierungsvorrichtung 15 befindet, automatisch auf die Halterung der Koordinatenpositionierungsvorrichtung (100) geladen wird.

15. Verfahren nach einem der vorhergehenden Ansprüche, wobei die Nennabmessungsinformationen mindestens eines der Höhe, Länge und Position des Merkmals (32) umfassen.

16. Vorrichtung, umfassend eine Koordinatenpositionierungsvorrichtung (100) zum Prüfen mindestens eines Merkmals (32) eines Teils (30), das eine vorbestimmte Nennform aufweist, wobei die Koordinatenpositionierungsvorrichtung eine Tasterhalterung umfasst, auf der verschiedene Taster austauschbar montiert werden können, wobei die Koordinatenpositionierungsvorrichtung so konfiguriert ist, dass die Tasterhalterung und das Teil in drei orthogonalen Freiheitsgraden relativ bewegt werden können, wobei ein Kontakttaster auf der Tasterhalterung montiert ist, und wobei der Kontakttaster ein Referenzelement (14) zum Eingriff mit dem Teil umfasst, und der Kontakttaster ferner einen Taststift (18) umfasst, der relativ zu dem Referenzelement ablenkbar ist und der eine Spitze, um mit der zu messenden Oberfläche in Kontakt zu treten, aufweist, wobei der Kontakttaster ferner einen Wandler zum Umwandeln der relativen Position der Spitze und des Referenzelements umfasst, wobei die Koordinatenpositionierungsvorrichtung ferner eine Steuerung (126) umfasst, die konfiguriert ist, um das Referenzelement und den Taststift des Kontakttasters mit dem Teil auf einer Seite des zu prüfenden Merkmals in Kontakt zu bringen, und konfiguriert ist, um zu bewirken, dass der Taststift das Merkmal durchquert, während Messdaten bezüglich der relativen Position der Spitze und des Referenzelements gesammelt werden, wobei die Vorrichtung ferner eine oder mehrere Prozessorvorrichtungen umfasst, die konfiguriert sind, um Abmessungsinformationen über das Merkmal aus den Messdaten zu extrahieren und die extrahierten Abmessungsinformationen mit Nennabmessungsinformationen für die Nennform des Merkmals des Teils zu vergleichen.

## Revendications

1. Un procédé d'inspection d'au moins une entité (32) d'une pièce (30), la ou les entités ayant une forme nominale prédéterminée, comprenant :
i) le chargement d'un palpeur contact (4) sur un support de palpeur d'un appareil de positionnement par coordonnées (100) qui est configuré de manière à faciliter l'échange de palpeurs sur celui-ci et qui est configuré de manière à faciliter le mouvement relatif du support de palpeur et de la pièce selon trois degrés de liberté orthogonaux, le palpeur contact comprenant un élément de référence (14) pour engager la pièce, et le palpeur contact comprenant en outre un stylet (18), le stylet pouvant être fléchi par rapport à l'élément de référence et ayant une pointe pour entrer en contact avec la surface à mesurer, dans lequel la position relative de la pointe et de l'élément de référence est traduite ;
ii) la mise en contact de l'élément de référence et du stylet du palpeur contact avec la pièce d'un côté de l'entité, puis l'action de faire traverser l'entité par le stylet tout en recueillant des données de mesure concernant la position relative de la pointe et de l'élément de référence, et
iii) l'extraction des informations de dimension sur l'entité à partir des données de mesure, ainsi que la comparaison des informations de dimension extraites par rapport aux informations de dimension nominale pour la forme nominale de l'entité de la pièce.

2. Un procédé selon la revendication 1, dans lequel le palpeur contact (4) comprend un palpeur sur patins, l'élément de référence comprenant un patin (14) qui traverse l'entité (32) avec le stylet (18).

3. Un procédé selon l'une quelconque des revendications précédentes, dans lequel la hauteur de l'entité (32) est d'au moins 50 µm, et éventuellement dans lequel la longueur de l'entité est d'au moins 50 µm.

4. Un procédé selon l'une quelconque des revendications précédentes, dans lequel l'étape consistant à amener le stylet (18) à traverser l'entité (32) tout en collectant des données de mesure concernant la position relative de la pointe et de l'élément de référence (14), est effectuée par l'appareil de positionnement par coordonnées (100) déplaçant le support de palpeur sur lequel le palpeur est monté de manière interchangeable.

5. Un procédé selon l'une quelconque des revendications précédentes, dans lequel le support de palpeur est installé sur un élément articulé (7) comprenant au moins un axe de rotation.

6. Un procédé selon la revendication 5, dans lequel le palpeur contact (4) et/ou l'élément articulé (7) sont configurés de telle sorte que l'élément de référence (14) et le stylet (18) peuvent être tournés autour d'au moins trois axes.

7. Un procédé selon la revendication 6, dans lequel l'élément articulé (7) sur lequel le palpeur contact (4) est monté fournit au moins deux des trois axes ou plus de rotation.

8. Un procédé selon la revendication 5, 6 ou 7, dans lequel amener le stylet (18) à traverser l'entité (32) comprend l'actionnement d'au moins un des axes de l'élément articulé (7) et/ou d'un ou plusieurs des axes linéaires de l'appareil de positionnement par coordonnées (100).

9. Un procédé selon l'une quelconque des revendications précédentes, dans lequel le stylet (18) est monté sur un bras allongé (16) qui est configuré pour pivoter autour d'un point distal de la pointe du stylet de sorte que la pointe puisse pivoter par rapport à l'élément de référence (14) autour dudit point de pivot.

10. Un procédé selon la revendication 9, comprenant l'application d'une correction non linéaire aux données de mesure obtenues par le palpeur contact (4) pour éliminer l'obliquité causée par le pivotement du stylet (18).

11. Un procédé selon l'une quelconque des revendications précédentes, dans lequel la pièce (30) comprend une pluralité d'entités (32) formées conformément à une spécification de conception prédéterminée, et dans lequel le procédé comprend les étapes consistant à amener le stylet (18) à traverser la pluralité d'entités tout en collectant des données de mesure concernant la position relative de la pointe et de l'élément de référence (14) et à extraire des informations de dimension concernant une ou plusieurs de la pluralité d'entités à partir des données de mesure, et à comparer les informations de dimension extraites par rapport à la spécification de conception de la pièce.

12. Un procédé selon la revendication 11, dans lequel la pluralité d'entités (32) comprend différentes sections d'un filetage d'un élément fileté de la pièce (30).

13. Un procédé selon l'une quelconque des revendications précédentes, dans lequel l'entité (32) comprend une entité renfoncée, par exemple une rainure.

14. Un procédé selon l'une quelconque des revendications précédentes, dans lequel l'étape i) comprend le chargement automatique du palpeur contact (4) sur le support de l'appareil de positionnement par coordonnées (100) à partir d'un rack situé dans le volume de mesure de l'appareil de positionnement par coordonnées.

15. Un procédé selon l'une quelconque des revendications précédentes, dans lequel les informations de dimension nominale comprennent au moins une information sur la hauteur, la longueur et la position de l'entité (32).

16. Un appareil comprenant un appareil de positionnement par coordonnées (100) servant à inspecter au moins une entité (32) d'une pièce (30) ayant une forme nominale prédéterminée, l'appareil de positionnement par coordonnées comprenant un support de palpeur sur lequel différents palpeurs peuvent être montés de manière interchangeable, l'appareil de positionnement par coordonnées étant configuré de telle sorte que le support de palpeur et la pièce peuvent être déplacés relativement selon trois degrés de liberté orthogonaux, dans lequel un palpeur contact est monté sur le support de palpeur, et dans lequel le palpeur contact comprend un élément de référence (14) pour engager la pièce, et le palpeur contact comprenant en outre un stylet (18) qui peut être fléchi par rapport à l'élément de référence et qui a une pointe pour entrer en contact avec la surface à mesurer, le palpeur contact comprenant en outre un transducteur pour traduire la position relative de la pointe et de l'élément de référence, l'appareil de positionnement par coordonnées comprenant en outre un contrôleur (126) qui est configuré pour amener l'élément de référence et le stylet du palpeur contact en contact avec la pièce d'un côté de l'entité à inspecter et configuré pour amener le stylet à traverser l'entité tout en collectant des données de mesure concernant la position relative de la pointe et de l'élément de référence, l'appareil comprenant en outre un ou plusieurs dispositifs de traitement configurés pour extraire des informations de dimension sur l'entité à partir des données de mesure et pour comparer les informations de dimension extraites par rapport aux informations de dimension nominale pour la forme nominale de l'entité de la pièce.
